# EUROPÄISCHE PATENTSCHRIFT

(11) **EP 2 814 876 B1**
(45) Veröffentlichungstag und Bekanntmachung des Hinweises auf die Patenterteilung: **20.04.2016**
(21) Anmeldenummer: 13702343.8
(22) Anmeldetag: 01.02.2013
(51) Int. Cl.: C08J 11/08

(54) **VERFAHREN ZUM RECYCLING VON BODENBELÄGEN**
PROCESS FOR RECYCLING FLOOR COVERINGS
PROCÉDÉ DE RECYCLAGE DE REVÊTEMENTS DE SOL

(30) Priorität: 14.02.2012 DE 102012002704
(43) Veröffentlichungstag der Anmeldung: 24.12.2014
(73) Patentinhaber: CLARIANT INTERNATIONAL LTD, 4132 Muttenz (CH)
(72) Erfinder: HERRLICH, Timo, 86444 Affing (DE); STEIB, Christian, 89356 Steppach (DE); HOHNER, Gerd, 86152 Augsburg (DE)
(74) Vertreter: Mikulecky, Klaus
(86) Internationale Anmeldenummer: PCT/EP2013/000319
(87) Internationale Veröffentlichungsnummer: WO 2013/120586

(56) Entgegenhaltungen:
- WO-A2-2008/064012
- DE-A1- 4 110 136
- FR-A1- 2 111 963
- GB-A- 107 383

## Beschreibung

Die Erfindung betrifft ein Recyclingverfahren für Bodenbeläge jeglicher Art zur Wiedergewinnung der eingesetzten Rohstoffe. Ein lösungsmittelbasierendes Recyclingverfahren ermöglicht es, die verschiedenen eingesetzten Rohstoffe am Ende des Lebenszyklus der Bodenbeläge oder des Kunstrasens sortenrein zurück zu gewinnen.

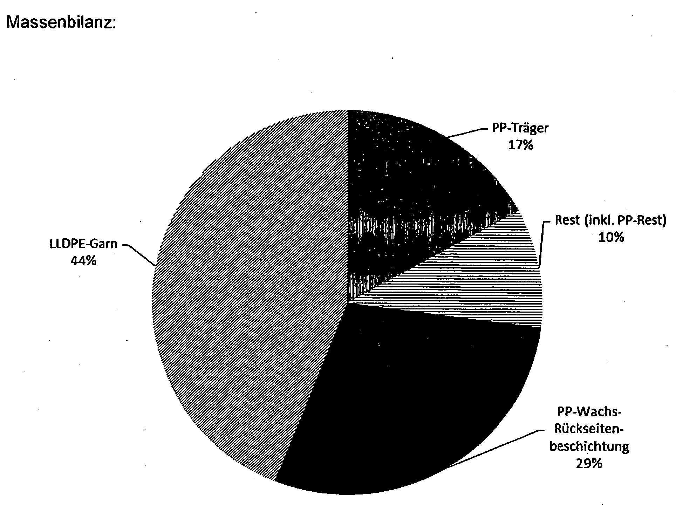

Teppiche und Kunstrasen sind Bodenbelagskonstruktionen, die aus einem Träger, einem Garn, einer Rückenbeschichtung und oftmals einem sekundären Rücken wie z. B. einem Vlies, Gewebe, Schaum oder einer Schwerschicht bestehen. Eine typische Aufteilung der prozentualen Massenanteile ist in Zeichnung 1 dargestellt. Für die unterschiedlichen Komponenten werden verschiedene Kunststoffe eingesetzt. Bei Teppichen wird für das Garn überwiegend Polypropylen, Polyamid oder auch Polyester eingesetzt. Bei Kunstrasen kommt vorwiegend Polyethylen und Polypropylen zum Einsatz. Für die Herstellung des Trägers wird meistens Polypropylen und Polyester verwendet. Damit das Garn in den Träger eingebunden wird, bedarf es einer zusätzlichen Beschichtung. Die derzeit in der Praxis angewandten Beschichtungstechnologien erlauben als Beschichtungsmaterial bei Teppichen (Nonwoven, Webware und Tuftware) fast ausschließlich den Einsatz von wässrigem Latex und Acrylaten und bei Kunstrasen neben wässrigem Latex auch Polyurethan. Die Verwendung von Latex und Polyurethan als Beschichtungsmaterial führt durch die nicht reversible Aushärtung der Rückenbeschichtung zu einem nur unvollständig werkstofflich oder rohstofflich recyclingfähigen Endprodukt.

Die verschiedenen Recyclingoptionen (Kompostieren, Verbrennen, Werkstoffrecycling, Rohstoffrecycling) insbesondere für Kunststoffgemische sind u. a. in Ullmann's Encyclopedia of Industrial Chemistry, 6. Aufl., Vol. A 21, Kap. Plastics, Recycling, Weinheim 2005 beschrieben. Insbesondere ist auch die rohstoffliche, werkstoffliche und energetische Wiederverwertungsmöglichkeit von Bodenbelagskonstruktionen wie Teppichen und Kunstrasen bereits beschrieben worden.

So wird in EP-A-2236671 und EP-A-2236672 als besondere Form des werkstofflichen Recyclings je ein Verfahren beschrieben, bei welchem alter Kunstrasen durch Regranulierung als Polymerblend zerkleinert wird, und das Regranulat durch Beimischung neuer Kunststoffe zur Herstellung sogenannter "Infill" verwendet wird. Als "Infill" bezeichnet man ein Granulat, welches auf den eigentlichen Kunstrasen beispielsweise zur Dämpfung lose aufgestreut wird. In der Fachwelt wird bei derartigen werkstofflichen Recyclingmethoden, bei dem die Werkstoffe nicht sortenrein anfallen und somit nicht in ihrer ursprünglichen Form verwendet werden können, auch von sogenanntem "Downcycling" gesprochen. Beispielhaft hierfür ist neben der Wiederverwertung als Infill für Kunstrasen auch der Einsatz von regranulierten Teppichen als Schwerschicht für Fliesen oder Automobilteppiche. WO-A-2008/64012 offenbart ein ähnliches Verfahren, aber nicht die Katalysatoren, das Erweichungspunkt und die Viskosität.

Die energetische Verwertung von Bodenbelägen, inklusive Kunstrasen, durch Verbrennen und damit die Rückgewinnung von Energie stellt zwar eine immer noch bessere Alternative zur Deponierung dar, sie steht aber aufgrund der nur einmaligen Anwendbarkeit im Widerspruch zur Recyclingidee, bei welcher ein Werkstoff den Recyclingkreislauf im Idealfall mehrfach durchläuft. Daher ist die energetische Verwertung vor allem eine Option für nicht weiter trennbare Stoffgemische sowie für besonders stark gealterte und nicht mehr einsetzbare Werkstofffraktionen. Tatsächlich empfiehlt die European Synthetic Turf Organisation (ESTO) in einer Stellungnahme vom März 2009 über sogenannte "end-of-life" Optionen die Verbrennung von Kunstrasen als die umweltfreundlichste Option für die Endnutzung anstelle einer Deponierung. Die Verbrennungsrückstände können anschließend z. B. in der Beton- und Zementindustrie als Füllstoffe weiterverwertet werden.

Neben dem werkstofflichen und energetischen Recycling gibt es noch die Option des rohstofflichen Recycling, bei welchem die Kunststoffe durch Hydrierungs-, Vergasungs-, Crack- und/oder Pyrolyseverfahren in ihre Ausgangsstoffe - Öl oder Gas - zurückgeführt werden. Die Verfahrenstechniken beim rohstofflichen Recycling sind in den 90er Jahren sehr weit entwickelt worden. So ist beispielsweise in WO 95/03375 ein Recyclingverfahren dargestellt, welches Kunststoffabfälle zu einem flüssigen Produkt aufspaltet und im Anschluss zu Olefinen wie z. B. Ethylen oder Propylen umsetzt. Das Verfahren ist besonders geeignet, um sehr große Mengen polyolefinreicher Kunststoffe (PE, PP) zu verwerten. Der stoffliche Nutzungsgrad des Verfahrens liegt mit über 93 % besonders hoch. Nachteilig ist allerdings, dass für die wirtschaftliche Nutzung eines Steamcrackers besonders große Mengen von sortenreinen Kunststoffabfällen zusammengeführt werden müssen und somit ausschließlich eine zentrale Nutzung wirtschaftlich sinnvoll ist. Auch Mischkunststoffe sind für dieses Verfahren nur als begrenzt brauchbar anzusehen. Vor allem auch wegen des Nachteils, die Kunststoffabfälle über große Distanzen zum Steamcracker transportieren zu müssen, hat sich das Verfahren in der Praxis nicht durchgesetzt.

Eine Alternative zur energetischen oder rohstofflichen Verwertung sowie zum Downcycling und Deponieren ist die stoffliche Verwertung oder das Werkstoffrecycling, dessen wichtigste Grundvoraussetzung es ist, die verschiedenen Kunststoffe sortenrein zu erhalten. Im Falle von Teppichen, Kunstrasen und Nonwoven gelingt dies durch einfache mechanische Trennverfahren nicht zufriedenstellend.

Nach dem bisher Ausgeführten besteht Bedarf nach einer wirksamen, wirtschaftlichen und dem Grundgedanken des Recyclings gerecht werdenden Verfahren der Wiederaufbereitung von Kunstrasen- und Teppichabfällen.

Es wurde nun gefunden, dass hier das Verfahren der Trennung über "Selektives Lösen" eine vielversprechende Möglichkeit darstellt, insbesondere dann, wenn die Rückenverklebung anstatt mit einer konventionellen Latex- oder Polyurethanbeschichtung mit einem thermoplastischen und damit in organischen Lösungsmitteln löslichen Polyolefinwachs durchgeführt wurde.

Die Trennung von Mischkunststoffen durch "Selektives Lösen" nutzt die unterschiedliche Löslichkeit verschiedener thermoplastischer Polymere, wie z. B. Kunststoffe und Wachse, in organischen Lösungsmitteln. Durch geeignete Wahl von Temperatur, Druck und Art des Lösungsmittels lassen sich stufenweise reine Polymerlösungen gewinnen und nach Entfernen des Lösungsmittels durch Abdampfen sortenreine Kunststoffe erhalten. Die Vorteile dieses Verfahrens liegen zum einen in der außerordentlich hohen erzielbaren Produktqualität und zum anderen in der Möglichkeit, Additive, welche die Einsatzmöglichkeiten für Regranulate oft drastisch senken, entfernen zu können. Auch lassen sich Polyolefingemische bestehend aus HDPE (High Density Polyethylene), LDPE (Low Density Polyethylene) und PP (Polypropylen) mit einem Mindestgehalt der Hauptkomponente von 95 % voneinander trennen (E. Novak, Verwertungsmöglichkeiten für ausgewählte Fraktionen aus der Demontage von Elektroaltgeräten, OFI Kunststoffinstitut, Wien 2001, 12-14.).

In EP-A-0491836 wird ein Verfahren zum Recycling von Kunststoffgemischen mittels "Selektiven Lösens" beschrieben. Der beschriebene Recyclingprozess basiert auf jeweils einem ausgewählten Lösungsmittel und dessen Lösevermögen für unterschiedliche Kunststoffe bei verschiedenen Temperaturen. Auf Fällungsmittel sowie weitere Lösungsmittel wird bei diesem Verfahren verzichtet.

Das Fraunhoferinstitut für Verfahrenstechnik hat auf Basis "Selektives Lösen" verschiedene verfahrenstechnische Fortschritte erzielt, insbesondere hinsichtlich einer wirtschaftlichen Prozessführung durch eine deutliche Verringerung des Lösemittelbedarfs und damit Erhöhung der Polymerbeladung. Beispielsweise beschreibt DE-A-102005026451 ein Verfahren zur Trennung von ABS (Acryl-Butadien-Styrol Copolymer) aus Mischkunststoffen. Das werkstoffliche Recycling von EPS (Expanded Polystyrol) wird in EP-A-1438351 beschrieben. In WO 2011/082802 wird die Weiterentwicklung des "Selektiven Lösens" explizit auf ein "selektives Quellen" (Fraunhofer-Verfahren) eingeschränkt und grenzt sich somit von EP-A-0491836 sowie von konventionellen Umlöseverfahren ab.

Unter Betrachtung der verschiedenen Recyclingoptionen (Verbrennen, Rohstoffrecycling, Downcycling) einer Bodenbelagskonstruktion (Nonwoven, Webware, Tuftware und Kunstrasen) mit dem Ziel eines nahezu vollständigen Werkstoffrecyclings, bei welchem die unterschiedlichen eingesetzten Kunststoffe sortenrein in die Produktion zurückgeführt werden, um daraus wieder Garn, Träger und die Rückenbeschichtung zu gewinnen, stellt ein lösemittelbasiertes Recyclingverfahren zur Zeit die einzige Alternative dar. Obige beschriebene Recyclingverfahren auf Basis von selektivem Lösen/Quellenbeschreiben explizit die Trennung von Mischkunststoffen sowie die Trennung unterschiedlicher Polyolefine (HDPE, LDPE und PP) und stellen dafür den Stand der Technik dar. Bisher wurde jedoch noch nicht die Trennung chemisch verwandter Polymermaterialien unterschiedlichen Molekulargewichts beschrieben (z. B. HDPE von HDPE-Wachs oder Polypropylen von Polypropylen-basiertem Wachs). Dementsprechend ist auch die Trennung von Polymerwachsen und höhermolekularen Homo- und Copolymeren, die jeweils auf Propylen-, Ethylen-, oder höheren α-Olefinen (C₄-C₂₀) basieren, nicht vorbeschrieben. Derartige Wachse unterscheiden sich vom chemisch verwandten Polymer insbesondere durch ihr niedrigeres Molekulargewicht und, damit korrelierend, durch ihre niedrigere Schmelzviskosität. Unter Polyolefinwachsen werden hier in Abgrenzung zu Kunststoffen solche Polyolefine verstanden, deren Schmelzviskosität bei 170 °C unterhalb von 40.000 mPa·s liegt.

Es wurde nun überraschend gefunden, dass sich Bodenbelagskonstruktionen mit einer Rückseitenbeschichtung auf Basis von polyolefinischen Homo- und Copolymerwachsen mittels eines lösemittelbasiertes Recyclingverfahren besonders eignen um daraus sortenrein die Werkstoffkomponenten zurück zu gewinnen. Gleichzeitig wurde gefunden, dass die polyolefinischen Homo- und Copolymerwachse aufgrund ihrer niedrigen Lösetemperaturen im Vergleich zu chemisch verwandten Polymeren höherer Molmasse einfacher sowie gründlicher abtrennbar sind. Darüber hinaus wurde gefunden, dass hinsichtlich einer sortenreinen Trennung diese besonders gut gelingt, wenn die polyolefinischen Homo- und Copolymerwachse mit Hilfe von Metallocenkatalysatoren hergestellt wurden.

Gegenstand der Erfindung ist daher ein Iösemittelbasiertes Trennverfahren zum werkstofflichen Wiedergewinnen der in Nonwoven-, Woven- und Tuftware, insbesondere in Kunstrasen, Teppichen und Webteppichen, eingesetzten Werkstoffe in ihre qualitativ sortenreinen Werkstoffkomponenten, wobei mindestens eine Werkstoffkomponente ein Polyolefinwachs enthält und wobei als Lösungs- und/oder Quellmittel halogenfreie aliphatische Kohlenwasserstoffe und/oder aromatische Kohlenwasserstoffe eingesetzt werden.

Bevorzugt handelt es sich dabei um ein Polyolefinwachs, das mit Hilfe von Metallocenkatalysatoren hergestellt wurde.

Das erfindungsgemäße lösungsmittelbasierte Trennverfahren betrifft das Recycling von Bodenbelagskonstruktionen wie Nonwoven, Woven und Tuftware, z. B. Kunstrasen, Teppiche und Webteppiche zur teilweisen, bevorzugt vollständigen Zurückgewinnung der einzelnen sortenreinen Werkstoffkomponenten. Als sortenrein werden die Werkstoffkomponenten dann betrachtet, wenn die Querkontamination mit einer anderen Werkstoffkomponente nicht über 10 Gew.-%, bevorzugt nicht über 5 Gew.-%, besonders bevorzugt nicht über 1 Gew.-%, beträgt und wenn sich damit die mechanischen Eigenschaften der Werkstoffkomponente (wie z. B. Zugfestigkeit, Reißdehnung, E-Modul, etc.) gegenüber den ursprünglichen Eigenschaften der Werkstoffkomponente vor dem Recycling um nicht mehr als 20 %, bevorzugt um nicht mehr als 10 %, verändern.

Die Anwendung des lösungsmittelbasierten Trennverfahrens auf Bodenbelagskonstruktionen setzt voraus, dass es sich bei den Werkstoffkomponenten um mindestens ein in einem geeigneten organischen Lösungsmittel lösliches Polymer sowie mindestens ein lösliches Polyolefinwachs handelt und dass maximal eine unlösliche Werkstoffkomponente vorhanden ist. Ferner liegen erfindungsgemäß die Lösetemperaturen hinreichend weit voneinander entfernt (mindestens 15 K), um ein "selektives Lösen" oder "selektives Quellen" zu gewährleisten.

Lösungsmittelbasierte Trennverfahren sind im Stand der Technik bekannt, allerdings nicht für das Recycling von Teppichen oder Kunstrasen. So werden die Methoden des "selektiven Lösens" wie in EP-A-0491836 oder in H. Martens, Recyclingtechnik, Spektrum Heidelberg 2011, 171ff, des "selektiven Quellens" wie in WO 2011/082802 sowie die "selektive Fraktionierung" impliziert.

Die genauen Ausführungsformen der lösungsmittelbasierten Trennverfahren zum erfindungsgemäßen Recycling von Bodenbelagskonstruktionen sind von einem Fachmann auf die jeweilige Bodenbelagskonstruktion und die darin verwendeten Werkstoffkomponenten abzustimmen.

Das "selektive Quellen" stellt hinsichtlich der technischen Bedingungen besondere Anforderungen, da hier aufgrund des geringen Lösungsmitteleinsatzes keine echten Polymerlösungen, sondern Polymergele hergestellt werden. Das Trennprinzip beruht auf der Steuerung der Viskosität über den Quellungsgrad und zielt auf die Trennung fester ungelöster Werkstoffkomponenten von viskosen Polymergelen durch Filtration oder Sedimentation unter geeigneter Scherung.

Durch Abdampfen des Lösungsmittels und in einem anschließenden Trocknungsverfahren bei Temperaturen im Bereich von 30 bis 120 °C, wobei vorzugsweise im unteren Bereich der Temperaturen auch Unterdruck eingesetzt wird, kann das eingesetzte Lösungsmittel abgetrennt und in den Prozess zurückgeführt werden. Ggf. dann noch vorhandene Lösungsmittelreste können auch durch Extrusion mit geeigneter Entgasung entfernt werden.

Als Lösungs- oder Quellmittel werden erfindungsgemäß halogenfreie aliphatische Kohlenwasserstoffe wie n-Heptan oder Decalin, aromatische Kohlenwasserstoffe wie Toluol, Xylol, Tetralin, oder Mischungen aus einem oder mehreren dieser Lösungsmittel eingesetzt.

Die erfindungsgemäße Anwendung eines lösungsmittelbasierten Trennverfahrens für Bodenbelagskonstruktionen setzt voraus, dass mindestens eine der Werkstoffkomponenten, bevorzugt die für die Rückseitenverklebung eingesetzte, aus einem Polyolefinwachs besteht. Die erfindungsgemäßen Polyolefinwachse umfassen Homopolymere auf Basis von Ethylen oder Propylen sowie Copolymere auf Basis von Polypropylen und 0,1 bis 30 Gew.-% Ethylen und/oder 0,1 bis 50 Gew.-% eines verzweigten oder unverzweigten C₄-C₂₀ α-Olefins. Diese Polyolefinwachse können in bekannter Weise durch Polymerisation z. B. nach einem Insertionsmechanismus mit Hilfe von Ziegler- oder Metallocenkatalysatoren oder durch ein radikalisches Hochdruckverfahren oder durch thermischen Abbau von kunststoffartigen Polyolefinen hergestellt werden. Entsprechende Herstellprozesse sind etwa in Ullmann's Encyclopedia of Industrial Chemistry, 2000. Waxes sowie in Ullmann's Encyclopedia of Industrial Chemistry, 2006, Metallocenes beschrieben. Erfindungsgemäß sind ebenso amorphe Polyalphaolefine (APAO) eingeschlossen. Erfindungsgemäß bevorzugt sind Polyolefinwachse, die mit Metallocenkatalysatoren hergestellt wurden. Überraschend ergab sich, dass solche Wachse sortenreiner abgetrennt werden können als beispielsweise Wachse aus dem Zieglerverfahren.

Bevorzugt sind Polyolefinwachse sowie deren Recyclate mit einer zahlenmittleren Molmasse Mₙ zwischen 500 und 25.000 g/mol und einer gewichtsmittleren Molmasse M_{w} zwischen 1.000 und 40.000 g/mol sowie eine Polydispersität M_{w}/Mₙ von kleiner 5, bevorzugt kleiner 2,5, besonders bevorzugt kleiner 1,8, aufweisen. Die Bestimmung der Molmasse erfolgt gelpermeationschromatographisch.

Bevorzugt zeichnen sich die Polyolefinwachse durch einen Tropf- oder Erweichungspunkt Ring/Kugel zwischen 70 °C und 165 °C und eine Schmelzviskosität gemessen bei 170 °C von maximal 40.000 mPa·s, bevorzugt maximal 30.000 mPa·s, besonders bevorzugt maximal 20.000 mPa·s, aus.

Die erfindungsgemäße Anwendung eines lösungsmittelbasierten Trennverfahrens auf Bodenbelagskonstruktionen bestimmt den Einsatz der sortenreinen Recyclate als Werkstoffkomponenten erneut in ihrer jeweiligen bisherigen Funktion in Nonwoven, Woven und Tuftware, z. B. Kunstrasen.

Der typische Aufbau von Bodenbelagskonstruktionen wird in Zeichnung 1 am Beispiel eines Kunstrasens dargestellt. Typische Werkstoffe für die Filamente können dabei Naturfasern, wie z. B. Wolle oder Kunstfasern aus LLDPE, LDPE, PP, Polyester (z. B. PET (Polyethylenterephthalat), PBT (Polybutylenterphthalat)) oder Polyamid (z. B. PA6, PA66, PA6, 10) sein. Typische Werkstoffe für die Träger sind z. B. Polyethylen, Polypropylen und Polyester. Die Rückseitenverklebung besteht erfindungsgemäß aus einem Polyolefinwachs.

Die Anwendung eines lösungsmittelbasierten Trennverfahrens auf Bodenbelagskonstruktionen umschließt auch den Einsatz von Füllstoffen wie z. B. Calciumcarbonat oder Hilfsstoffe wie z. B. Flammschutzmittel, Antistatika, Wachse, Harze, Weichmacher, Pigmente und Antioxidantien.

### Experimenteller Teil:

Das nachfolgende Beispiel soll die Erfindung näher erläutern, ohne sie jedoch auf konkret angegebene Ausführungsformen zu beschränken. Prozentangaben sind, wenn nicht anders angegeben, stets als Gewichtsprozente zu verstehen.

Das Schmelzverhalten (Schmelzpunkt, -enthalpie) wurde mit Hilfe der "differential scanning calorimetry" DSC nach DIN 11357 bestimmt. Die Schmelzviskositäten der Wachse wurden nach DIN 53019 mit einem Rotationsviskosimeter, die Tropfpunkte nach ASTM D3954, die Erweichungspunkte Ring/Kugel nach ASTM D3104 bestimmt.

Das Molmassengewichtsmittel M_{w} und das Molmassenzahlenmittel Mₙ wurden durch Gelpermeationschromatographie bei einer Temperatur von 135 °C in 1,2-Dichlorbenzol bei Kalibrierung gegenüber einem entsprechenden PP- bzw. PE-Standard ermittelt.

Die Messung der mechanische Eigenschaften (Zugfestigkeit und Reißdehnung) wurden nach DIN 527-1 durchgeführt.
- Beispiel 1:: Selektives Lösen am Beispiel Kunstrasen:

Das für das Beispiel verwendete Kunstrasenmuster bestand aus einem LLDPE (Linear Low Density Polyethylen)-Garn, einem Rücken aus PP sowie einer Rückseitenbeschichtung auf Basis eines mit Metallocen als Katalysator hergestellten PP-Polyolefinwachses, dessen ursprüngliche Eigenschaften in Form seines Tropfpunktes, seiner Molmasse, seiner Schmelzviskosität und seiner mechanischen Eigenschaften in der nachfolgenden Tabelle angegeben sind.

8 kg Kunstrasenabfall der oben beschrieben Probe wurden in einem Häcksler zerkleinert und mit 40 kg p-Xylol versetzt, dann wurde das Gemisch stufenweise erwärmt. Die jeweiligen Lösetemperaturen lagen bei 73 °C für das PP-Polyolefinwachs, 96 °C für LLDPE und bei 146 °C für PP. Die Lösezeiten lagen jeweils unter 20 min.

Die Extraktion des PP-Polyolefinwachses und des LLDPE erfolgten jeweils 2-stufig, die Abtrennung von PP verlief einstufig. Die im Lösungsmittel gelösten Werkstoffkomponenten wurden durch Temperaturabsenkung ausgefällt, ausgepresst und im Vakuum bei 40 °C getrocknet. Das dadurch zurückgewonnene Lösungsmittel wurde dem Prozess wieder zugeführt.

Alle Ergebnisse sind in der nachfolgenden Tabelle zusammengestellt.

**Tabelle**

| | PP-Wachs (Rückseitenbeschichtung) | PP-Wachs-Recyclat | LLDPE (Garn) | LLDPE-Recyclat | PP (Träger) | PP-Recyclat |
|---|---|---|---|---|---|---|
| Tropfpunkt [°C | 97 | 97 | n.a. | n.a. | n.a. | n.a. |
| Tₘ [°C | 88 | 89 | 125 | 123 | 163 | 160 |
| ΔHₘ [mJ/mg | -39 | -35 | -130 | -120 | -99 | -90 |
| Mₙ | 17900* | 19400* | | | | |
| M_{w} | 29700* | 30400* | | | | |
| PDI | 1,7 | 1,6 | | | | |
| Zugfestigkeit [MPa | 9,9 | 9,6 | 8,9 | 7,9 | n.b. | n.b. |
| Reißdehnung [% | 960 | 1010 | 12 | 13 | n.b. | n.b. |
| Viskosität bei 170 °C [mPa·s | 5600 | 5200 | n.a. | n.a. | n.a. | n.a. |

| | | | | | | |
|---|---|---|---|---|---|---|
| n.a. nicht anwendbar n.b. nicht bestimmt * PP-Standard ** PE-Standard | | | | | | |

## Patentansprüche

1. Verfahren zum Wiedergewinnen von einzelnen, sortenreinen Werkstoffkomponenten, die in Nonwoven, Woven und Tuftware in Kombination miteinander eingesetzt sind, durch selektives Lösen und/oder selektives Quellen, **dadurch gekennzeichnet, dass** mindestens eine der Werkstoffkomponenten ein Polyolefinwachs enthält und dass als Lösungs- und/oder Quellmittel halogenfreie aliphatische Kohlenwasserstoffe und/oder aromatische Kohlenwasserstoffe eingesetzt werden und
es sich bei dem Polyolefinwachs um durch Polymerisation in Anwesenheit von Metallocenkatalysatoren hergestellte Homo- oder Copolymere aus Ethylen, Propylen und/oder höherer α-Olefine mit 4 bis 20 C-Atomen handelt und dass das Polyolefinwachs einen Tropf- oder Erweichungspunkt, Ring/Kugel, zwischen 70 und 160 °C und eine Schmelzviskosität, gemessen bei einer Temperatur von 170 °C, von maximal 40.000 mPa·s aufweist.

2. Verfahren nach Anspruch 1 , **dadurch gekennzeichnet, dass** das Polyolefinwachs eine gewichtsmittlere Molmasse M_{w} zwischen 1.000 und 40.000 g/mol und eine zahlenmittlere Molmasse Mₙ zwischen 500 und 25.000 g/mol aufweist.

3. Verfahren nach einem oder nach mehreren der Ansprüche 1 bis 2, **dadurch gekennzeichnet, dass** das Polyolefinwachs ein Homopolymer auf Basis von Ethylen oder Propylen oder ein Copolymer bestehend aus Propylen und 0,1 bis 30 Gew.-% Ethylen und/oder 0,1 bis 50 Gew.% mindestens eines verzweigten oder unverzweigten C₄-C₂₀ α-Olefins ist und eine Schmelzviskosität, gemessen bei 170 °C, von maximal 30.000 mPa·s, bevorzugt maximal 20.000 mPa·s aufweist.

4. Verfahren nach einem oder nach mehreren der Ansprüche 1 bis 3, **dadurch gekennzeichnet, dass** das Polyolefinwachs sowie dessen Recyclat einen Tropf- oder Erweichungspunkt Ring/Kugel zwischen 70 °C und 160 °C und das Recyclat eine Schmelzviskosität gemessen bei 170 °C von maximal 30.000 mPa·s, bevorzugt maximal 20.000 mPa·s aufweisen.

5. Verfahren nach einem oder nach mehreren der Ansprüche 1 bis 4, **dadurch gekennzeichnet, dass** das Polyolefinwachs sowie dessen Recyclat eine gewichtsmittlere Molmasse M_{w} zwischen 1.000 und 40.000 g/mol und eine zahlenmittlere Molmasse Mₙ zwischen 500 und 25.000 g/mol aufweisen sowie ein M_{w}/Mₙ < 5, bevorzugt < 2.5, besonders bevorzugt < 1,8.

6. Verfahren nach einem oder nach mehreren der Ansprüche 1 bis 5, **dadurch gekennzeichnet, dass** die Werkstoffkomponenten, die in Nonwoven, Woven und Tuftware in Kombination miteinander eingesetzt sind, beim Versetzten mit einem Quellmittel unter Quellung mindestens einer Komponente ein Polymergel als erste Phase ausbilden, die maximal 80 Gew.-% Quellmittel enthält, dass sich gleichzeitig oder nach einer temperatur- oder druckinduzierten Trennung eine zweite Phase ausbildet, in welcher mindestens eine andere Werkstoffkomponente gelöst vorliegt und dass gegebenenfalls ein weder in der ersten noch in der zweiten Phase befindlicher unlöslicher Störstoff mittels Filtration oder Sedimentation von dem Polymergel abgetrennt wird.

7. Verfahren nach einem oder nach mehreren der Ansprüche 1 bis 6, **dadurch gekennzeichnet, dass** abgetrennte, noch Lösungsmittel enthaltende Werkstoffe durch Trocknung bei Temperaturen im Bereich von 30 bis 120 °C, ggf. in Anwesenheit von Unterdruck, vom Lösungsmittel befreit und isoliert werden.

8. Verfahren nach einem oder nach mehreren der Ansprüche 1 bis 7, **dadurch gekennzeichnet, dass** es sich bei den Werkstoffkomponenten, die in Nonwoven, Woven und Tuftware in Kombination miteinander eingesetzt sind, um mindestens ein, besonders bevorzugt um mindestens zwei, in einem bestimmten organischen Lösungsmittel lösliche Polymere handelt und um maximal eine unlösliche Werkstoffkomponente.

9. Verfahren nach einem oder nach mehreren der Ansprüche 1 bis 8, **dadurch gekennzeichnet, dass** es sich bei dem Werkstoff für die Filamente um Naturfasern, Wolle, oder Kunstfasern aus LLDPE, LDPE, PP, Polyester oder Polyamid und bei dem Werkstoff für den Träger um Polyethylen oder Polypropylen handelt.

10. Verfahren nach einem oder nach mehreren der Ansprüche 1 bis 9, **dadurch gekennzeichnet, dass** es sich bei dem Werkstoff für die Verklebung um ein als Schmelzklebemasse eingesetztes Polyolefinwachs, aus amorphen Poly-alpha-olefinen (APAO) und/oder um metallocenbasierende Homo- und Copolymere handelt.

11. Verfahren nach einem oder nach mehreren der Ansprüche 1 bis 10, **dadurch gekennzeichnet, dass** die Werkstoffkomponenten weitere Füllstoffe, wie Calciumcarbonat oder Hilfsstoffe wie Flammschutzmittel, Antistatika, Wachse, Harze, Weichmacher, Pigmente und Antioxidantien enthalten können.

12. Verfahren nach einem oder nach mehreren der Ansprüche 1 bis 11, **dadurch gekennzeichnet, dass** die wiedergewonnenen, sortenreinen Werkstoffkomponenten erneut in ihrer jeweiligen bisherigen Funktion in Nonwoven, Woven und Tuftware, vorzugsweise in Kunstrasen eingesetzt werden.

13. Verfahren nach einem oder nach mehreren der Ansprüche 1 bis 12, **dadurch gekennzeichnet, dass** die wiedergewonnenen, sortenreinen Werkstoffkomponenten sich in ihren mechanischen Materialeigenschaften, insbesondere in ihrer Zugfestigkeit, ihrem E-Modul und ihrer Reißdehnung, um nicht mehr als 20 % von den Werkstoffkomponenten im ursprünglichen Zustand unterscheiden.

## Claims

1. A method of recovering individual varietally pure component materials used combined with each other in tufteds, wovens and nonwovens by selective dissolution and/or selective swelling, wherein at least one of the component materials contains a polyolefin wax and the solvent and/or swellant used comprises halogen-free aliphatic hydrocarbons and/or aromatic hydrocarbons and the polyolefin wax comprises homo- or copolymers manufactured from ethylene, propylene and/or higher α-olefins of 4 to 20 carbon atoms by polymerization in the presence of metallocene catalysts and the polyolefin wax has a dropping or softening point, ring/ball, between 70 and 160°C and a melt viscosity, as measured at a temperature of 170°C, of not more than 40 000 mPa·s.

2. The method as claimed in claim 1 wherein the polyolefin wax has a weight-average molar mass M_{w} between 1000 and 40 000 g/mol and a number-average molar mass Mₙ between 500 and 25 000 g/mol.

3. The method as claimed in one or more of claims 1 to 2 wherein the polyolefin wax is a homopolymer based on ethylene or propylene or a copolymer consisting of propylene and 0.1 to 30 wt% of ethylene and/or 0.1 to 50 wt% of at least one branched or unbranched C₄-C₂₀ α-olefin and has a melt viscosity, as measured at 170°C, of not more than 30 000 mPa·s, preferably not more than 20 000 mPa·s.

4. The method as claimed in one or more of claims 1 to 3 wherein the polyolefin wax and also its recyclate have a dropping or softening point (ring/ball) between 70°C and 160°C and the recyclate has a melt viscosity measured at 170°C of not more than 30 000 mPa·s, preferably not more than 20 000 mPa·s.

5. The method as claimed in one or more of claims 1 to 4 wherein the polyolefin wax and also its recyclate have a weight-average molar mass M_{w} between 1000 and 40 000 g/mol and a number-average molar mass Mₙ between 500 and 25 000 g/mol and also an M_{w}/Mₙ < 5, preferably < 2.5, more preferably < 1.8.

6. The method as claimed in one or more of claims 1 to 5 wherein the component materials used in combination with one another in tufteds, wovens and nonwovens respond to admixing with a swellant by at least one component undergoing swelling and forming a polymer gel as first phase which contains not more than 80 wt% of swellant, a second phase is formed concurrently or after a temperature- or pressure-induced separation and comprises at least one other component material in a dissolved state, and optionally an insoluble contrary present neither in the first phase nor in the second phase is removed from the polymer gel by filtration or sedimentation.

7. The method as claimed in one or more of claims 1 to 6 wherein materials still containing solvent after having been separated off are desolventized and isolated by drying at temperatures in the range from 30 to 120°C, optionally in the presence of negative pressure.

8. The method as claimed in one or more of claims 1 to 7 wherein the component materials used combined with one another in tufteds, wovens and nonwovens comprise one or more, more preferably two or more, polymers that are soluble in a certain organic solvent and not more than one insoluble component material.

9. The method as claimed in one or more of claims 1 to 8 wherein the material for the filaments comprises natural fibers, wool, or manufactured fibers of LLDPE, LDPE, PP, polyester or polyamide and the material for the backing comprises polyethylene or polypropylene.

10. The method as claimed in one or more of claims 1 to 9 wherein the material for the bonding comprises a polyolefin wax used as hot-melt adhesive and composed of amorphous poly-alpha-olefins (APAO) and/or comprises metallocene-based homo- and copolymers.

11. The method as claimed in one or more of claims 1 to 10 wherein the component materials may contain further filler materials, such as calcium carbonate or auxiliary materials such as flame retardants, antistats, waxes, resins, plasticizers, pigments and antioxidants.

12. The method as claimed in one or more of claims 1 to 11 wherein the recovered, varietally pure component materials are reused in their respective previous function in tufteds, wovens and nonwovens, preferably in synthetic turf.

13. The method as claimed in one or more of claims 1 to 12 wherein the recovered, varietally pure component materials differ by not more than 20% in their mechanical material-specific properties, in particular their tensile strength, their modulus of elasticity and their elongation at break, from the component materials in the original state.

## Revendications

1. Procédé de récupération de composants de matériaux individuels homogènes, qui sont utilisés en combinaison les uns avec les autres dans des non-tissés, des tissés et des tissus touffetés, par dissolution sélective et/ou gonflement sélectif, **caractérisé en ce qu'**au moins un des composants de matériaux contient une cire de polyoléfine et **en ce que** des hydrocarbures aliphatiques et/ou des hydrocarbures aromatiques sans halogène sont utilisés en tant que solvant et/ou agent gonflant, et
la cire de polyoléfine consiste en des homo- ou copolymères d'éthylène, de propylène et/ou d'α-oléfines supérieures contenant 4 à 20 atomes C fabriqués par polymérisation en présence de catalyseurs métallocène, et **en ce que** la cire de polyoléfine présente un point d'égouttement ou de ramollissement, anneau/bille, compris entre 70 et 160 °C, et une viscosité à l'état fondu, mesurée à une température de 170 °C, d'au plus 40 000 mPa·s.

2. Procédé selon la revendication 1, **caractérisé en ce que** la cire de polyoléfine présente une masse molaire moyenne en poids M_{w} comprise entre 1 000 et 40 000 g/mol et une masse molaire moyenne en nombre Mₙ comprise entre 500 et 25 000 g/mol.

3. Procédé selon une ou plusieurs des revendications 1 à 2, **caractérisé en ce que** la cire de polyoléfine est un homopolymère à base d'éthylène ou de propylène ou un copolymère constitué de propylène et de 0,1 à 30 % en poids d'éthylène et/ou 0,1 à 50 % en poids d'au moins une α-oléfine en C₄-C₂₀ ramifiée ou non ramifiée, et présente une viscosité à l'état fondu, mesurée à 170 °C, d'au plus 30 000 mPa·s, de préférence d'au plus 20 000 mPa·s.

4. Procédé selon une ou plusieurs des revendications 1 à 3, **caractérisé en ce que** la cire de polyoléfine et son produit recyclé présentent un point d'égouttement ou de ramollissement anneau/bille compris entre 70 °C et 160 °C, et le produit recyclé présente une viscosité à l'état fondu mesurée à 170 °C d'au plus 30 000 mPa·s, de préférence d'au plus 20 000 mPa·s.

5. Procédé selon une ou plusieurs des revendications 1 à 4, **caractérisé en ce que** la cire de polyoléfine et son produit recyclé présentent une masse molaire moyenne en poids M_{w} comprise entre 1 000 et 40 000 g/mol, et une masse molaire moyenne en nombre Mₙ comprise entre 500 et 25 000 g/mol, ainsi qu'un M_{w}/Mₙ < 5, de préférence < 2,5, de manière particulièrement préférée < 1,8.

6. Procédé selon une ou plusieurs des revendications 1 à 5, **caractérisé en ce que** les composants de matériaux, qui sont utilisés en combinaison les uns avec les autres dans des non-tissés, des tissés et des tissus touffetés, forment lors du mélange avec un agent gonflant par gonflement d'au moins un composant un gel polymère en tant que première phase, qui contient au plus 80 % en poids d'agent gonflant, **en ce qu'**une seconde phase se forme simultanément ou après une séparation induite par la température ou la pression, dans laquelle au moins un autre composant de matériau se présente sous forme dissoute, et **en ce qu'**une matière interférente insoluble qui n'est présente ni dans la première, ni dans la seconde phase est éventuellement séparée du gel polymère par filtration ou sédimentation.

7. Procédé selon une ou plusieurs des revendications 1 à 6, **caractérisé en ce que** les matériaux séparés contenant encore du solvant sont débarrassés du solvant et isolés par séchage à des températures dans la plage allant de 30 à 120 °C, éventuellement en présence d'une sous-pression.

8. Procédé selon une ou plusieurs des revendications 1 à 7, **caractérisé en ce que** les composants de matériaux, qui sont utilisés en combinaison les uns avec les autres dans des non-tissés, des tissés et des tissus touffetés, consistent en au moins un, de manière particulièrement préférée au moins deux polymères solubles dans un solvant organique déterminé, et au plus un composant de matériau insoluble.

9. Procédé selon une ou plusieurs des revendications 1 à 8, **caractérisé en ce que** le matériau pour les filaments consiste en des fibres naturelles, de la laine ou des fibres synthétiques en LLDPE, LDPE, PP, polyester ou polyamide, et le matériau pour le support consiste en du polyéthylène ou du polypropylène.

10. Procédé selon une ou plusieurs des revendications 1 à 9, **caractérisé en ce que** le matériau pour le collage consiste en une cire de polyoléfine utilisée en tant que masse adhésive thermofusible, à base de poly-alpha-oléfines amorphes (APAO) et/ou en des homo- et copolymères à base de métallocène.

11. Procédé selon une ou plusieurs des revendications 1 à 10, **caractérisé en ce que** les composants de matériaux peuvent contenir des charges supplémentaires telles que du carbonate de calcium ou des adjuvants tels que des agents ignifuges, des antistatiques, des cires, des résines, des plastifiants, des pigments et des antioxydants.

12. Procédé selon une ou plusieurs des revendications 1 à 11, **caractérisé en ce que** les composants de matériaux homogènes récupérés sont réutilisés dans leur fonction préalable respective dans des non-tissés, des tissés et des tissus touffetés, de préférence dans du gazon artificiel.

13. Procédé selon une ou plusieurs des revendications 1 à 12, **caractérisé en ce que** les composants de matériaux homogènes récupérés ne diffèrent au niveau de leurs propriétés de matériau mécaniques, notamment au niveau de leur résistance à la traction, de leur module E et de leur allongement à la rupture, pas de plus de 20 % des composants de matériaux à l'état initial.
